(19) Europäisches Patentamt

European Patent Office

Office européen des brevets

(11) EP 1 729 474 A2

(12) EUROPEAN PATENT APPLICATION

(43) Date of publication:
06.12.2006 Bulletin 2006/49

(51) Int Cl.:
H04L 27/26 (2006.01)     H04L 5/02 (2006.01)

(21) Application number: 06011393.3

(22) Date of filing: 01.06.2006

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(30) Priority: 01.06.2005 KR 20050046908

(71) Applicant: Samsung Electronics Co., Ltd.
Yeongtong-gu
Suwon-si, Gyeonggi-do (KR)

(72) Inventors:
• Seo, Chang-Woo
  Yeongtong-gu
  Suwon-si
  Gyeonggi-do (KR)
• Cho, Jin-Youn
  Yeongtong-gu
  Suwon-si
  Gyeonggi-do (KR)

• Lee, Jae-Kon
  Yeongtong-gu
  Suwon-si
  Gyeonggi-do (KR)
• Cho, Sung-Hyun
  Yeongtong-gu
  Suwon-si
  Gyeonggi-do (KR)
• Jung, Young-Ho
  Yeongtong-gu
  Suwon-si
  Gyeonggi-do (KR)
• Hwang, Hyo-Sun
  Yeongtong-gu
  Suwon-si
  Gyeonggi-do (KR)

(74) Representative: Grünecker, Kinkeldey,
Stockmair & Schwanhäusser
Anwaltssozietät
Maximilianstrasse 58
80538 München (DE)

(54) **Coding/decoding apparatus for orthogonal frequency division multiple access communication system and method for designing the same**

(57) Provided is a coding/decoding apparatus for an orthogonal frequency division multiple access (OFDMA) communication system that takes multiple users into consideration and uses block coding/decoding scheme. In the apparatus, a mapper determines paths through which information of users will be provided, according to states of sub-channels allocated to the users. A coding/decoding unit parallel-processes the information of the users through the paths selectively connected by the mapper. The coding/decoding unit includes coders/decoders having performance lower than the maximum processing performance determined taking into account a size of a processing block and the number of sub-channels.

FIG.1

**Description**

**BACKGROUND OF THE INVENTION**

1. Field of the Invention

The present invention relates generally to a coding/decoding apparatus for an Orthogonal Frequency Division Multiple Access (OFDMA) communication system and a method for designing the same, and in particular, to an apparatus and method, wherein in order to solve the difficulty in system design due to the rapid increase in processing performance and input/output bandwidth of a coder/decoder, occurring when high-speed data transmission is performed based on block-based coding/decoding, the method constructs different-sized coders/decoders in parallel taking into account the number of users capable of making simultaneous access and the size of a processing block, and uses appropriate coders/decoders according to the number of accessed users, thereby noticeably reducing the processing performance and input/output bandwidth of the coder/decoder.

2. Description of the Related Art

Recently, in the wireless communication field, the increasing need for various types of multimedia data has caused a rapid increase in demand for a higher data rate and a wider coverage area. In particular, many related service providers are making an effort to establish an improved standard in alliance with each other in the wireless Local Area Network (LAN) field or the wireless Metropolitan Area Network (MAN) field, which is attracting much attention as a technology for high-speed data transmission of various qualities-of-service (QoSs) required by the 4th generation mobile communication system (4G).

In the 4G system, research is being conducted to provide various QoSs supporting high-speed data communication at a data rate of, for example, 100Mbps, with an aim of guaranteeing terminal mobility and QoS for the wireless LAN or wireless MAN system.

The wireless MAN system positively employs an Orthogonal Frequency Division Multiplexing (OFDM) scheme and an OFDMA scheme modified to allow multiple users to use the OFDM scheme, in order to support a broadband transport network for physical channels. The OFDM/OFDMA scheme transmits physical channel signals using a plurality of orthogonal sub-carriers, thereby enabling high-speed data transmission, and uses different sub-carrier bands as signal transmission frequency bands, thereby acquiring frequency diversity gain.

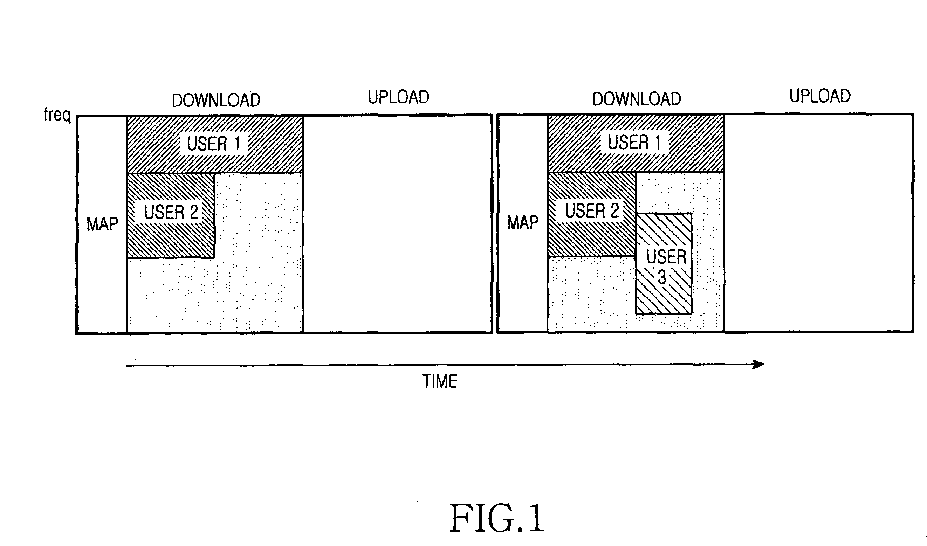

FIG 1 is a diagram for a brief description of an OFDMA system. Specifically, FIG 1 illustrates a method in which multiple users are allocated sub-channels defined as sets of sub-carriers, and a frame structure in which the sub-channels are arranged along the time axis.

A characteristic of the OFDMA system will now be described. A multi-user system is managed through a MAP defined as two-dimensional time-frequency information, and a download/upload frame structure is used for transmission of actual information. In addition, the same time or frequency is shared by multi-user information (packet), and sub-channel based Adaptive Modulation and Coding (AMC) is used.

AMC is a data transmission scheme that adaptively determines different channel modulation schemes and coding schemes according to the channel state between a transmitting station and a receiving station, thereby increasing the overall cell efficiency. AMC has a plurality of modulation schemes and a plurality of coding schemes, and modulates/codes channel signals with a combination of the modulation schemes and the coding schemes.

During design of the OFDMA system, if a coding scheme uses bit based coding (bit-by-bit coding), the coder only needs to receive and process data at a rate corresponding to the required total band, and output the processed data to a demodulator. However, the OFDMA system employing a scheme of dividing the processing data into blocks with a predetermined size and coding the divided data, for higher efficiency, cannot intactly use the simple scheme.

As illustrated in FIG 1, various users are allocated resources in different sizes. Therefore, the resource allocated to each user is different in terms of time when a size of the resource becomes a 1-block size, and the data smaller than the block size cannot be provided to a succeeding modulator because it cannot be coded. Particularly, in order to code a block for an nth user and obtain the coding result, coding on all blocks of a 1 st-user block to an (n-1)th-user block should be previously performed. Up to the present, therefore, a scheme of coding blocks for all users at once and then providing the coding results to the modulator at a predetermined time is used. That is, in order to obtain the output data that should be sequentially provided, it is necessary to code much more data at a high rate, so the processing capability required for the coder rapidly increases, making the actual realization difficult. This will be described in more detail with reference to the conventional system architecture.

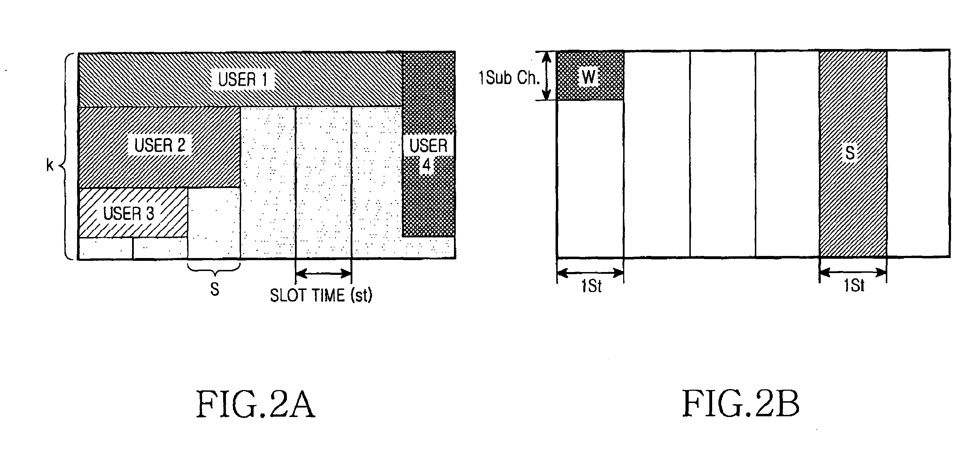

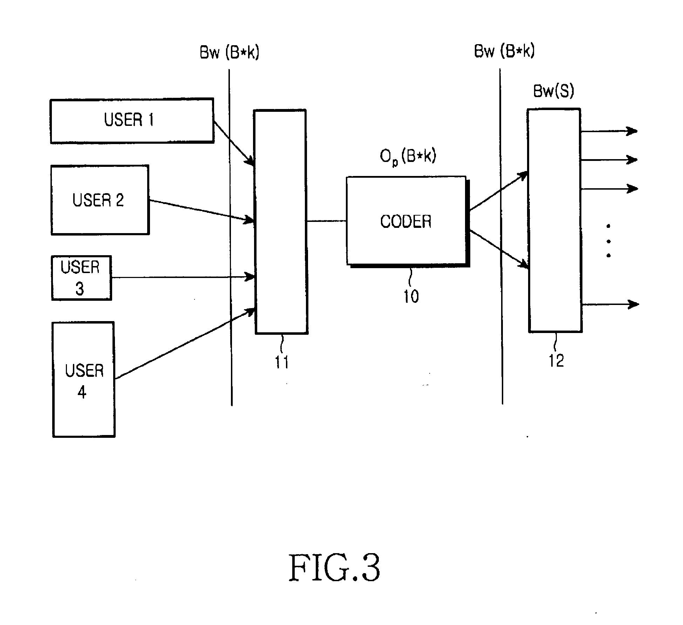

FIGs. 2A, 2B and 3 illustrate frame structures and a system architecture for a description of a scenario in which user information included in a download frame is coded by block-based coding (block-by-block coding).

FIGs. 2A and 2B defme the terms necessary for a description of the present invention. Specifically, FIGs. 2A and 2B illustrate a method for allocating resources to be used by multiple users with two-dimensional information of sub-channels and time, and also illustrate the possible units for the resource allocation. The download frame is divided into a plurality of slots (symbol groups) with the passage of time, and coded information is provided to a succeeding stage (modulator) in units of slot time St. For that purpose, a coder should be able to previously code the corresponding information block by block, store the coded information in a buffer, and then output the information at each slot time St. As illustrated in FIG 2A, information for multiple users can be freely allocated in units of slots and sub-channels, and the null information can be mapped to the non-allocated parts. The sub-channels each are a unit set of sub-carriers allocated to the multiple users, and means that if sub-carriers are classified into k sub-channels as illustrated, they can be simultaneously used by k users.

FIG 2B illustrates a processing unit in the coder. Although the resources are allocated herein along the sub-channel axis and the time axis, it should be noted that the resources actually are allocated in units of bit sizes for the corresponding domains. A size of bits (i.e., all bits belonging to one time slot) that can provided through all sub-channels for one slot time St will be denoted by S, and the minimum unit that can be allocated to one user will be denoted by W. W, as shown in the drawing, indicates the total number of bits that can be transmitted for one slot time St through one sub-channel which is the minimum frequency band that can be allocated to one user.

Because the user information allocated in the above units is processed block by block as described above, a data field for each individual user, defmed by a sub-channel for each individual user and the time slots, should be correctly divided block by block. A size of the block will be denoted by B.

If the size S of the slot and the size B of the block are expressed as the minimum size W allocable to one user, then $S = \alpha \times W$ and $B = \beta \times W$. Taking this into account, the size B of the block can be determined (for example, B = 2000 to 3000 bits).

FIG 3 is a diagram briefly illustrating a coding part for performing actual coding using data and the MAP allocated according to the foregoing basic block coding scheme. In this structure, data for multiple users is coded by a serial coding unit 10 and provided to multiple modulators. For that purpose, there is a need for an input unit 11 for converting parallel data into serial data, and an output unit 12 for converting serial data into parallel data. These can be included in the coding unit 10, and serve as a mapper and a demapper, which are simply comprised of a multiplexer (MUX) and a demultiplexer (DEMUX), respectively.

A description will now be made of a process of coding data for multiple users, belonging to one download frame, which uses the above structure, and providing the coded data to the modulators slot by slot for the overall download frame interval. Because the coding unit 10 can only process the user data block by block and cannot simply divide the user data in units of slot time, all the information during a time slot interval including at least one of all user blocks should be coded. That is, because all user blocks including the corresponding slot should be coded before data of a specific slot is transmitted, the required processing power and output bandwidth of the coding unit 10 inevitably considerably increase.

In the drawing, the bandwidth is denoted by BW (bit size). The maximum bandwidth in the corresponding part is expressed with the bit size, and the bandwidth of the input unit 11 (i.e., input bandwidth of the coding unit 10) is BW (Bxk). This is the bandwidth necessary for processing the block, which is the processing unit, according to the number of users (the number of sub-channels). Even the output bandwidth of the coding unit 10, provided to the output unit 12, is the same, and in this case, the bandwidth is also BW(Bxk). This is because the coding unit 10 that performs a serial operation outputs as much data, coded block by block, as the k sub-channels. The processing quantity (regarded as a processing rate) of the coding unit 10 at that time is denoted by $O_p(B \times k)$, and this is the processing quantity for processing as many blocks as the number of sub-channels (the number of users) for the unit time. In particular, the processing quantity of the coding unit 10, denoted by $O_p$(bit size), also means processing performance, and can expressed in the process rate of bps. For example, $O_p(B)$ is a bps value determined by dividing the block size by the one-slot time St.

In this system architecture, the bandwidth through which the actual output is provided is the output bandwidth BW(S) of the output unit 12, whereas the input/output bandwidth of the coding unit 10 should be BW(Bxk) which is equal to the processing performance where the coding unit 10 can perform the processing. In this case, the slot size S is greater than the block size B, but is much smaller than the block size Bxk for all users.

For example, in the OFDMA system supporting a download rate of 100Mbps for each individual user, if the number k of sub-channels is 24 (k=24), it means that BW(B) is 100Mbps. In this case, the input/output bandwidth of the coding unit 10 should be 2400Mbps. In addition, the processing rate of the coding unit 10 that must take charge of the input/output operation should also support 2400Mbps, causing an increase in the load of the coding unit 10. The increase in the load causes difficulty in system design and a considerable increase in the power consumption.

The foregoing problems and causes thereof occur in the same way even in a decoder for processing the upload frame.

The current maximum-rate coder/decoder (for example, the Xilinx product, which is a turbo coder/decoder) merely provides performance of about 150Mbps, and the download rate for each individual user in the current system is merely 32Mbps at the highest (for the system proposed by Runcom, and Intel).

That is, the current system architecture faces limitations on the processing rate and bandwidth, so there is a need for development of a fast OFDMA system that takes multiple users into account, capable of satisfying a high data rate at a lower output bandwidth using a coder/decoder having a lower processing rate.

## SUMMARY OF THE INVENTION

It is, therefore, an object of the present invention to provide a coding/decoding apparatus for an OFDMA communication system and a method for designing the same, wherein the method constructs an optimal number of optimal-sized parallel coders/decoders taking into account the necessary coding/decoding processing power according to the number of sub-channels possibly occupied by multiple users, and a block size which is the processing unit, and performs coding/decoding by mapping the parallel coders/decoders in the optimal state for the actually allocated multi-user distribution, thereby reducing the required total processing power of the coders/decoders and the input/output bandwidth, and achieving a target rate for each individual user.

According to one aspect of the present invention, there is provided a coding/decoding apparatus for an orthogonal frequency division multiple access (OFDMA) communication system that takes multiple users into consideration and uses block coding/decoding scheme. The apparatus includes a mapper for determining paths through which information of users will be provided, according to states of sub-channels allocated to the users; and a coding/decoding unit for parallel-processing the information of the users through the paths selectively connected by the mapper, wherein the coding/decoding unit includes coders/decoders having performance lower than the maximum processing performance determined taking into account a size of a processing block and the number of sub-channels.

Preferably, the coding/decoding unit includes coders/decoders having processing performance $O_p(B)$ for processing one block for a unit time. The number of the coders/decoders is smaller than a number corresponding to a quotient obtained by dividing a size of the sub-channel by a size of the block.

Preferably, distribution of coders/decoders having a processing level lower than the maximum processing level, included in the coding/decoding unit, has a specific permutation pattern.

According to another aspect of the present invention, there is provided a method for designing a coding/decoding apparatus for an orthogonal frequency division multiple access (OFDMA) communication system that takes multiple users into consideration and uses block coding/decoding scheme. The includes setting the number of sub-channels and a size of a block; allocating a sub-channel to each individual user for one slot, and determining a required processing level and a number of coders/decoders and a mapping path by dividing a size of each allocated sub-channel by the size of the block; and determining a required processing level and a number of all coders/decoders, and mapping paths according to users and sub-channel allocation by repeating the above step while changing the set number of users.

Preferably, the step of allocating a sub-channel to each individual user includes allocating sub-channels such that the number of sub-channels allocated to the last user is maximized and is smaller than the number of sub-channels allocated to the preceding users.

## BRIEF DESCRIPTION OF THE DRAWINGS

The above and other objects, features and advantages of the present invention will become more apparent from the following detailed description when taken in conjunction with the accompanying drawings in which:

FIG 1 is a diagram illustrating a frame structure for a general OFDMA system;
FIGs. 2A and 2B are diagrams defining the units for a description of an exemplary method for allocation users in a multi-user OFDMA system;
FIG 3 is a diagram for a description of a structure and operation of an OFDMA system employing the conventional block coding technique;
FIG 4 is a diagram illustrating exemplary user allocation in a multi-user OFDMA system;
FIG 5 is a diagram for a description of a structure and operation according to the present invention;
FIG 6 is a diagram for a description of a detailed example according to the present invention;
FIG 7 is a flowchart for a description of a coder selection and mapping process according to the present invention; and
FIG 8 is a diagram illustrating exemplary simple system architecture constructed using the coders selected in accordance with the flowchart of FIG 7.

## DETAILED DESCRIPTION OF PREFERRED EMBODIMENTS

Preferred embodiments of the present invention will now be described in detail with reference to the annexed drawings. In the following description, a detailed description of known functions and configurations incorporated herein has been omitted for clarity and conciseness.

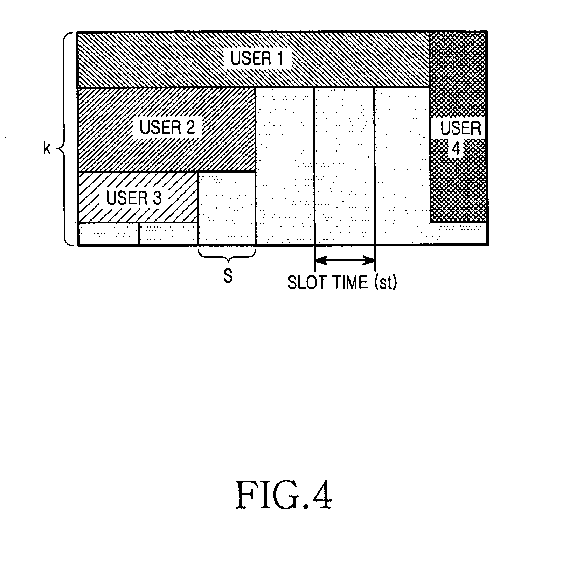

FIG 4 is a diagram illustrating an exemplary case in which a download frame is allocated to multiple users according to the present invention. Although only the fields allocated for a limited number of users are shown, a plurality of user fields, the number of which is equal to the number of determined sub-channels, may also be simultaneously allocated.

The size of each user field allocated in the frame resources is divided by the size of the block which is the coding/decoding unit, and the coder/decoder codes/decodes user information in units of the blocks, and then provides the coded/decoded information to its succeeding stage at the slot time.

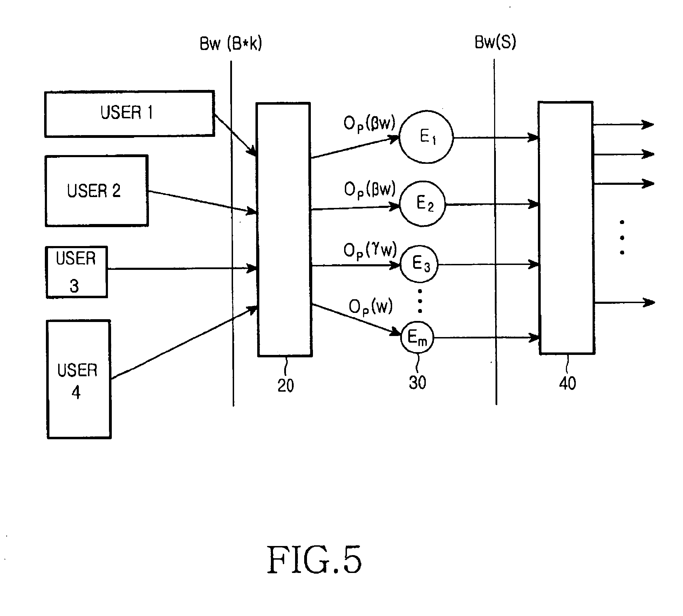

FIG 5 is a diagram illustrating brief architecture of a coding apparatus according to the present invention. The coding apparatus is constructed such that data for multiple users is parallel processed using multiple coders 30.

As illustrated, the coding apparatus includes a mapper 20 connected to coders 30 most appropriate for processing corresponding user information taking into account the number of users and the sub-channels allocated to the respective users, a coding unit 30 having a plurality of coders with various processing levels such that it can most properly parallel-process the user information provided through a path connected by the mapper 20, and a demapper 40 for appropriately mapping the output of the coding unit 30 to its succeeding stage (multiple modulators).

The key characteristic of the above architecture is that multiple parallel coders constituting the coding unit 30 are most ideally constructed. Therefore, when data for multiple users is coded, the corresponding data can be processed with the lowest power taking into account the number of users allocated to the same time slot and distributions of the sub-channels allocated to the respective users. In particular, the required number of coders, classified according to processing performance, constituting the coding unit 30 and information for the mapping path selection to be performed by the mapper 20 can be found based on a relatively simple rule, so the design is very simple.

To simply realize the existing serial coder/decoder with parallel coders/decoders, it is possible to simply arrange as many coders/decoders having the optimal performance Op(B) as the number of sub-channels for each individual user. If the serial coder/decoder is simply realized with the parallel coders/decoders in this way, the total processing quantity of the coders/decoders is $O_p(B \times k)$, which is not different from that of the serial coder/decoder. The input/output bandwidth at this time is BW(Bxk), which is equal to the conventional one, making it possible to obtain the advantage of the parallel construction, and increasing the power consumption due to the high bandwidth.

Accordingly, there is a need for a method for, through the optimization thereof, allowing only the required number of coders/decoders to have the maximum individual processing capability $O_p(B)$, and allowing the other coders/decoders to have an appropriate low processing capability. The present invention can easily obtain parallel coders/decoders and mapping paths capable of having the optimal efficiency using the fact that all coding/decoding processes are performed block by block.

Among the coders constituting the coding unit 30, the coders having the highest processing performance have the performance of $O_p(B) = O_p(\beta W)$, and the number thereof is lower than the number S/B determined by dividing the slot size by the block size. Among the other low-performance coders, a required number of the low-performance coders make a particular permutation pattern according to their processing capability. The total processing quantity of the coding unit 30 can be found by Equation (1):

$$Total\ processing\ quantity = O_p(B) \times \frac{S}{B} + O_p(b) \times (k - \frac{S}{B}), [O_p(b) < O_p(B)]$$

$$\ldots \ldots \ldots (1)$$

Herein, because the $O_p(b)$ has a specific permutation pattern, an approximate value of Equation (3) below can be found using $O_p(W)$ and $\beta(=B/W)$ from Equation (2):

$$O_p(b) \times (k - \frac{S}{B}) \fallingdotseq O_p(W) \times \beta \times \frac{(\beta - 1)}{2} \times \frac{(k - \frac{S}{B})}{2}$$

$$\ldots \ldots \ldots (2)$$

That is, based on this, the total processing quantity can be rewritten as Equation (3):

$$Total\ processing\ quantity = \ O_p(B) \times \frac{S}{B} + O_p(W) \times \beta \times \frac{(\beta - 1)}{2} \times \frac{(k - \frac{S}{B})}{2}$$

$$\cdots\cdots\cdots (3)$$

Because it is difficult to determine the correct reduction in the processing quantity only with the above Equations, the reduction in the total processing quantity will be described using the example used in the conventional scheme.

For example, assuming that the number k of sub-channels for the OFDMA system supporting a download rate of 100Mbps is 24 and the block size B is 3 times ($\beta$=3) the minimum allocation size W, the conventional total processing quantity is 2400Mbps, whereas the novel total processing quantity according to Equation (3) is 1333Mbps (=100Mbps×8+100Mbps×1/3× (3×2)/2×16×1/3), which is about 55% of the conventional total processing quantity. This leads to the possibility of reducing complexity of the coding/decoding unit and reducing the processing power consumption.

The reduction in the total processing quantity may mean the possibility of reducing even the output bandwidth from the coding unit 30 to a level of 1333Mbps. Actually, however, as to the output of the coding unit 30, the coded data is stored in the internal buffer and then provided according to the slot band BW(S) which is the actual operation rate.

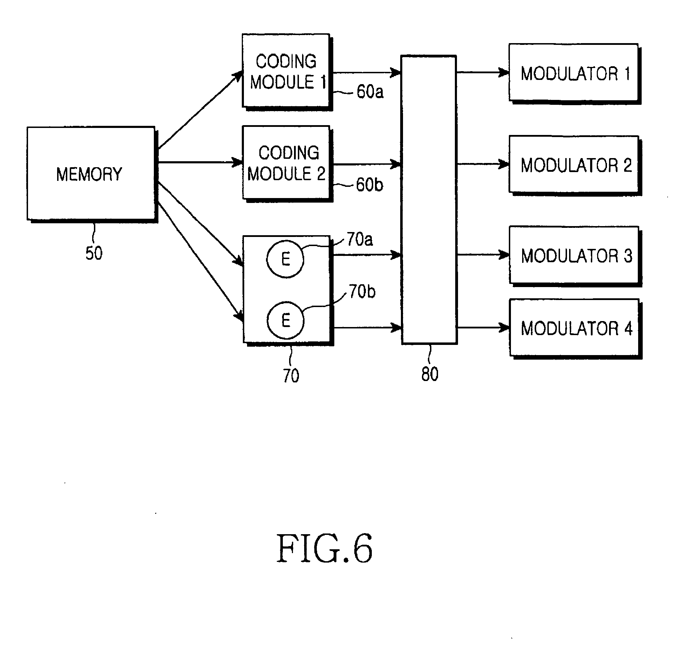

FIG 6 is a diagram illustrating actual hardware realization of the architecture described above. The architecture is realized for the exemplary case where there are 4 sub-channels, the block size B is 2 times the minimum allocation size W, and the slot size S is 2 times the block size B. In this case, there is a need for two coders that should have the maximum processing performance Op(B), and there is also a need for two coders having the lower performance ($O_p(W)$ in this case). The detailed method for determining the required processing level and the required number of coding modules according to the relationship between the number of sub-channels, the block size, and a size the minimum allocation field will be described in detail later.

In this case, the coder having the maximum processing performance uses S/B dedicated coding modules 60a and 60b, and the other coder requiring the lower processing performance is realized with software modules 70a and 70b. That is, the dedicated coding modules 60a and 60b, because their processing performances affect the maximum download rate, should have a high processing level if possible. Actually, therefore, the separately formed hardware devices, semiconductor circuit designs, or Application Specific Integrated Circuits (ASICs) can be used for the dedicated decoding modules 60a and 60b. The coders that can be realized by software can be constructed such that multiple coders are processed by software in one physical device using the inner cores such as a digital signal processor and a micro controller, thereby decreasing complexity of the coding unit. Because the constructed coders differ in performance, the use of only the required minimum number of coders can contribute to a noticeable reduction in power consumption.

A memory 50 is the part to which allocation information (mapping information) of each individual user for user data, sub-channels, and slots is provided. The memory 50 is connected to the coding modules 60a, 60b, 70a and 70b using a bus scheme that is switched with the passage of time. The full processing rate of the coding unit 60a, 60b and 70 is equal to Equation (3), and the maximum input/output bandwidth of the actual decoding unit is also identical.

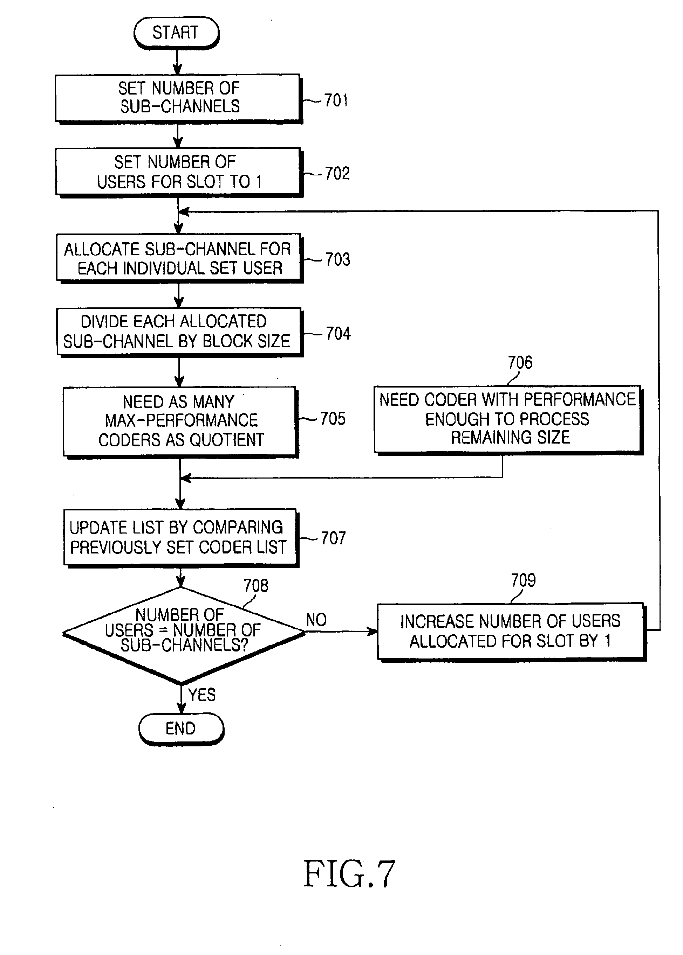

FIG 7 is a flowchart illustrating an operation method according to the present invention. Specifically, FIG 7 illustrates a process of finding the optimal parallel coders/decoders and mapping information according to the number of sub-channels, the block size, and the slot size.

Basically, according to a characteristic of a desired system, the block size B and the slot size S are determined based on the size W of the minimum field allocable to one user, and the number of sub-channels, i.e., the number of users capable of making simultaneous access, is determined in step 701.

In order to acquire, based on the above information, the required number of coders/decoders having the maximum processing performance, mapping information at that time, information on the optimal number of coders/ decoders with the optimal performance determined taking into account distribution of sub-channels allocable in various ways to the simultaneous accessing users, and the corresponding mapping information, the method of the present invention follows the illustrated procedure.

A scenario in which one user fully uses one slot will first be introduced, at step 702. In this case where one user occupies the full slot, all sub-channels are allocated to the user in step 703. In another case where multiple users simultaneously use one slot, sub-channels are appropriately allocated according to the number of users.

In the former case where one user uses all of the sub-channels, the required processing performance of the coder/decoder is the maximum performance $O_p(B)$. In the latter case where multiple users are allocated all of the sub-channels on a shared basis, the required processing performance of the coder/decoder is the processing performance $O_p(b)$, which is lower than $O_p(B)$.

By dividing the size (determined by sub-channel allocation) of the slot field allocated for each individual user by the block size in step 704, it is possible to determine the required number of coders/decoders having various processing performances. In the case where a single user is allocated all of the sub-channels, because the full slot size S will be allocated to the corresponding user, a quotient S/B obtained by dividing the slot size S by the block size B is set as the maximum number of coders/decoders having the corresponding processing performance $O_p(B)$, generating a list of the coders/decoders. For example, if one user uses the full slot field and S/B is 3, the coders/decoders having the performance $O_p(B)$ are temporarily set as 1st to 3rd coders/decoders. That is, the single-user information is parallel processed by the 3 coders/decoders, and the parallel processing path at that time can be obtained depending on the mapping information.

If the full slot is divided according to the sub-channel allocation and allocated to multiple users, the required types and number of coders/decoders is provisionally determined according to the quotient and the remainder, obtained by dividing the divided allocation field size for each individual user by the block size B.

That is, at step 705, the occurrence of the quotient means that there is a need for as many coders/decoders having the processing performance Op(B) as the number corresponding to the quotient. At step 706, the occurrence of the remainder c means indicates a need for coders/decoders having the processing capability $O_P(c \times W)$. The list of the coders/decoders, obtained in this way, is temporarily stored in step 707, and through the following iterative process, coders/decoders on a new level are added to the previously stored coder/decoder list or the previous coders/decoders are used instead. The number of users is then compared to the number of sub-channels in step 7098. If they are the same, the process ends.

If not, thereafter, in step 709, the method increases the number of users sharing one slot by 1, and then determines, in the same manner, the number of coders/decoders having the maximum processing performance necessary for coding/decoding data for the increased users, and the types of the coders/decoders having the lower processing performance. Although various sub-channel allocation schemes can be used even for the determine number of users, the present invention allocates the sub-channels such that the sub-channel to be allocated to the last user among the users to be allocated channels is largest but does not exceed the sub-channel allocated to the previous user, and in the determined number of users, determines the types and the number of coders/decoders only for one type of sub-channel allocation pattern. For example, in the case where 14 sub-channels are used and 3 users share the sub-channels, a user 1 is allocated 5 sub-channels, a user 2 is allocated 5 sub-channels, and a user 3 is allocated 4 sub-channels. There is no need for considering other allocation schemes. The actually required types and number of coders/decoders according to their performances can be determined taking into account only the patterns requiring the maximum processing power in the process of considering them by increasing the number of users.

In this method, it is possible to simply determine the optimal types and number of coders/decoders, and acquire the important mapping information. The mapping information can be acquired once again using the determined coders/decoders, when necessary.

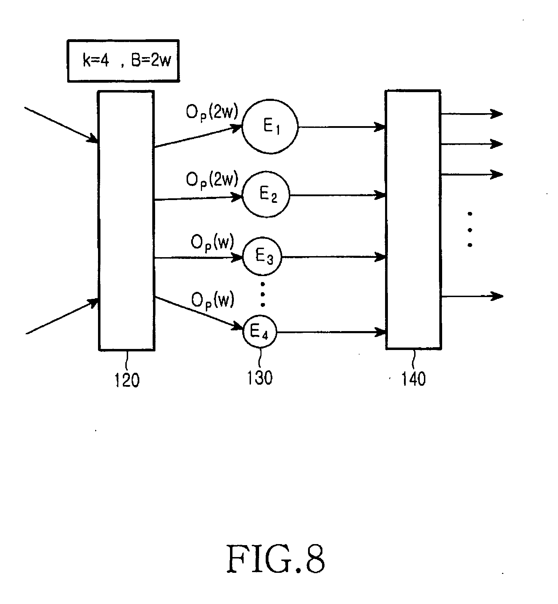

FIG. 8 is a diagram illustrating an exemplary method for actually designing optimal parallel coders using the optimal parallel coder/decoder design method conceptually described in connection with FIG 7. In the illustrated case, by applying the scheme of FIG 7 to the case where the number k of sub-channels is 4 and the block size B is 2 times the minimum field size W allocable to one user, two coders having the maximum processing performance of $O_p(B)=O_p(2W)$ and two coders having the lower processing performance $O_p(W)$ are found, and thereafter, the system is configured using the decoders. A process of obtaining the above results is performed as follows.

In the case where the number of users is 1, because all sub-channels are allocated to the corresponding user, the value obtained by dividing the allocated size by the block size is 4W/2W=2, so there is a need for 2 coders having the maximum processing performance $O_p(2W)$. Therefore, it is assumed that 1st and 2nd coders have the processing performance of $O_P(2W)$.

In the case where the number of users is 2, because a half of the sub-channels is allocated to each of the 2 users, the value obtained by dividing the allocated size by the block size is 2W/2W=1, so each user needs one coder having the maximum processing performance Op(2W). In this case, therefore, the users need to alternately use the previous 1st and 2nd coders.

In the case where the number of users is 3, because the sub-channels are allocated to the 3 users in the ratio of {2, 1, 1}, if each size is divided by the block size, there are 2 users that should perform coding using one coder having the maximum processing performance and one coder having the remainder=1, i.e., having the performance $O_p(W)$. As a result, there is a need for two coders having the performance $O_p(W)$. Therefore, if it is considered that these are processed using the previously set coder #1 and coder #2, there is a need to add only one coder having the performance $O_p(W)$, so it is assumed that a coder #3 has the processing performance $O_P(W)$.

Finally, in the case where the number of users is 4, because the sub-channels are allocated to the 4 users in the ratio of {1, 1, 1, 1}, there is a need for 4 coders having the performance $O_p(W)$. Therefore, the types and number of coders according to their performances are determined by adding a coder having the processing performance $O_p(W)$ as the coder #4.

Therefore, the coding apparatus is constructed as illustrated. In this case, the coders $E_1$ and $E_2$ having the

maximum performance are realized with individual hardware modules, and the coders $E_3$ and $E_4$ having the lower performance can be realized by software in one digital signal processor.

The processing rate of the mapper 120 that provides an input to the coding unit 130 and the processing rate of the demapper 140 that provides the output of the coding unit 130 can have the bandwidth shown in Equation (3), and can be appropriately adjusted to a slot rate in the actual realization.

Although the foregoing exemplary method has been applied to the coding unit, it can also be applied to the decoding unit in the same manner.

As can be understood from the foregoing description, a coding/decoding apparatus for an OFDMA communication system and a method for designing the same construct an optimal number of optimal-sized parallel coders/decoders taking into account the necessary coding/decoding processing power according to the number of sub-channels possibly occupied by multiple users, and a block size which is the processing unit, and perform coding/decoding by mapping the parallel coders/decoders in the optimal state for the actually allocated multi-user distribution, thereby reducing the required total processing power of the individual coders/decoders and the input/output bandwidth, increasing realization possibility, reducing the realization cost, and noticeably reducing the driving power by enabling only the optimized coders/decoders.

While the invention has been shown and described with reference to a certain preferred embodiment thereof, it will be understood by those skilled in the art that various changes in form and details may be made therein without departing from the spirit and scope of the invention as defined by the appended claims.

**Claims**

1. A coding/decoding apparatus for an orthogonal frequency division multiple access (OFDMA) communication system that takes multiple users into consideration and uses a block coding/decoding scheme, the apparatus comprising:

   a mapper for determining paths through which information of users will be provided, according to states of sub-channels allocated to the users; and
   a coding/decoding unit for parallel-processing the information of the users through the paths selectively connected by the mapper, wherein the coding/decoding unit includes coders/decoders having performance lower than a maximum processing performance determined taking into account a size of a processing block and a number of sub-channels.

2. The coding/decoding apparatus of claim 1, wherein the coding/decoding unit includes coders/decoders having processing performance $O_p(B)$ for processing one block for a unit time, the number of the coders/decoders being smaller than a number corresponding to a quotient obtained by dividing a size of the sub-channel by a size of the block.

3. The coding/decoding apparatus of claim 1, wherein the coder/decoder with the lowest processing level included in the coding/decoding unit is a coder/decoder having processing performance $O_p(W)$ for processing the minimum unit size allocable to one user per slot for a unit time.

4. The coding/decoding apparatus of claim 1, wherein distribution of coders/decoders having a processing level lower than a maximum processing level, included in the coding/decoding unit, has a specific permutation pattern.

5. A method for designing a coding/decoding apparatus for an orthogonal frequency division multiple access (OFDMA) communication system that takes multiple users into consideration and uses a block coding/decoding scheme, the method comprising the steps of:

   setting a number of sub-channels and a size of a block;
   allocating a sub-channel to each individual user for one slot, and determining a required processing level and a number of coders/decoders and a mapping path by dividing a size of each allocated sub-channel by the size of the block; and
   determining the required processing level and the number of all coders/decoders, and mapping paths according to users and sub-channel allocation by repeating the above allocating step while changing the set number of users.

6. The method of claim 5, wherein the step of changing the set number of users comprises changing the number of users occupying one slot in ascending order.

7. The method of claim 5, wherein the step of allocating a sub-channel to each individual user comprises allocating sub-channels such that the number of sub-channels allocated to a last user is maximized and is smaller than the number of sub-channels allocated to preceding users.

FIG.1

FIG.2A

FIG.2B

EP 1 729 474 A2

Bw (B*k)

Bw (B*k)

Bw(S)

USER 1

USER 2

USER
3

USER
4

$O_p$ (B*k)

CODER

10

11

12

FIG.3

FIG.4

FIG.5

FIG.6

```
                    ┌─────────┐
                    │  START  │
                    └────┬────┘
                         ↓
            ┌──────────────────────┐
            │   SET NUMBER OF      │──701
            │   SUB-CHANNELS       │
            └──────────┬───────────┘
                       ↓
            ┌──────────────────────┐
            │   SET NUMBER OF      │──702
            │ USERS FOR SLOT TO 1  │
            └──────────┬───────────┘
                       ↓
            ┌──────────────────────┐
            │ ALLOCATE SUB-CHANNEL │──703
            │ FOR EACH INDIVIDUAL  │
            │      SET USER        │
            └──────────┬───────────┘
                       ↓
            ┌──────────────────────┐
            │  DIVIDE EACH         │──704
            │  ALLOCATED           │
            │  SUB-CHANNEL BY      │
            │  BLOCK SIZE          │
            └──────────┬───────────┘
                       ↓                           706
            ┌──────────────────────┐   ┌──────────────────────────┐
            │   NEED AS MANY       │   │ NEED CODER WITH          │
            │   MAX-PERFORMANCE    │──705│ PERFORMANCE ENOUGH TO   │
            │   CODERS AS QUOTIENT │   │ PROCESS REMAINING SIZE   │
            └──────────┬───────────┘   └──────────────────────────┘
                       ↓
            ┌──────────────────────┐
            │ UPDATE LIST BY       │──707
            │ COMPARING PREVIOUSLY │
            │ SET CODER LIST       │
            └──────────┬───────────┘
                       ↓          708                709
                    ◇─────────────◇        ┌────────────────────┐
                   ╱ NUMBER OF     ╲  NO    │ INCREASE NUMBER OF │
                  ◇ USERS = NUMBER  ◇──────→│ USERS ALLOCATED    │
                   ╲ OF SUB-CHANNELS╱       │ FOR SLOT BY 1      │
                    ◇──────┬───────◇        └────────────────────┘
                         YES
                          ↓
                    ┌─────────┐
                    │   END   │
                    └─────────┘
```

FIG.7

FIG.8